# EUROPEAN PATENT SPECIFICATION

(11) **EP 1 130 754 B1**
(45) Date of publication and mention of the grant of the patent: **08.09.2004**
(21) Application number: 01830086.3
(22) Date of filing: 09.02.2001
(51) Int. Cl.: H02N 1/00

(54) **Electrostatic motor comprising a stator and a rotor with cooperating surfaces having different curvatures**
Elektrostatischer Mikromotor mit unterschiedlich gekrümmten Stator- und Rotoroberflächen
Moteur électrostatique dont les surfaces de stator et rotor ont des courbures différentes

(30) Priority: 24.02.2000 IT TO000177
(43) Date of publication of application: 05.09.2001
(73) Proprietor: C.R.F. Società Consortile per Azioni, 10043 Orbassano (Torino) (IT)
(72) Inventor: Pizzi, Marco c/o CRF Società Consortile per Azioni, 10043 Orbassano (Torino) (IT)
(74) Representative: Notaro, Giancarlo

(56) References cited:
- EP-A- 0 601 516
- US-A- 6 007 309
- FUJITA H: "STUDIES OF MICRO ACTUATORS IN JAPAN" , PROCEEDINGS OF THE INTERNATIONAL CONFERENCE ON ROBOTICS AND AUTOMATION. SCOTTSDALE, MAY 15 - 19, 1989, WASHINGTON, IEEE COMP. SOC. PRESS, US, VOL. VOL. 3, PAGE(S) 1559-1564 XP000044337 ISBN: 0-8186-1938-4 * page 1561, column 2, line 35 - line 45; figure 5C *
- PATENT ABSTRACTS OF JAPAN vol. 016, no. 521 (E-1285), 27 October 1992 (1992-10-27) -& JP 04 193075 A (FUJI ELECTRIC CO LTD), 13 July 1992 (1992-07-13)
- MINORU SAKATA ET AL: "AN ELECTROSTATIC TOP MOTOR AND ITS CHARACTERISTICS" SENSORS AND ACTUATORS A, ELSEVIER SEQUOIA S.A., LAUSANNE, CH, vol. A21, no. 1 / 3, 1 February 1990 (1990-02-01), pages 168-172, XP000149579 ISSN: 0924-4247

## Description

This invention relates to electrostatic motors.

Low power, small sized electrostatic motors, suitable for use as actuators in micro-electronic technology applications, for operating mechanical devices and similar, in conditions in which vibrations occur, such as, for example, in automotive applications, have previously been made. These electrostatic actuators make use of electrically conducting, flexible plates, also called lashes or petals, each a stator associated to one extremity and a rotor associated to the opposite extremity. The application of voltage pulses between the petals and an electrode associated to the rotor causes adhesion by electrostatic effect of the petals to the rotor, with consequent movement of the latter with respect to the stator. The applicant has deposited various patents which refer to this technology (see, for example, EP-A0 837 550, EP-A-0 837 551).

The purpose of this invention is to realise an electrostatic motor of the type described above which exploits a completely different operating principle and which is characterised by relatively simple construction and low cost.

In order to achieve this purpose, this invention relates to an electrostatic motor comprising:
- a stator, including a substrate with a convex tapered surface which bears a dial of radial electrodes covered by a layer of dielectric coating;
- a rotor, consisting of a flexible, electrically conducting disc facing the mouth of the tapered surface of the stator and having a tapered surface which taper ratio angle is higher than that of the stator, and
- devices for supplying a voltage between the electrodes of the stator and the rotor, so to make the disc forming the rotor adhere to the convex tapered surface by electrostatic effect, said disc forming in said condition one or more radial waves projecting from the general tapered surface of the stator, consequent to the different taper ratio of stator and rotor.

Said power devices being suitable for:
- powering all electrodes of the stator, with the exception of at least one electrode, where the rotor can consequently form said wave and,
- moving along the dial of electrodes said at least one electrode which is not powered, so to make the corresponding wave formed by the rotor turning on said tapered surface of the stator travel, so that after each turn of the wave the rotor is turned by a certain angle with respect to the stator.

In a preferred form of embodiment, the rotor is a metallic membrane, or a polymeric membrane with a metallic coating, or a silicon membrane, made by employing typical MEMS (Micro-Electro-Mechanical Systems) processes, such as photolithography, etching, etc., which total thickness is compressed in the range from 0.5 to 10 microns. The stator has a conductive coating forming the electrodes which thickness is in the range from a few tenths of a micron to a few microns.

According to an additional form of embodiment, the separation line between adjacent electrodes of the stator is a zigzag line, which ensures secure electrostatic adhesion of the rotor on the stator also in the area where the wave moves, as described in greater detail below.

Characteristics and advantages of this invention will be illustrated with reference to a preferred embodiment as non-limiting examples in the enclosed drawings, whereas:
- figure 1 is an exploded schematic prospective view of a preferred form of embodiment of the motor according to this invention,
- figure 2 is a plan view of the rotor of the motor, according to arrow II in figure 1,
- figure 3 is a perspective view of the motor according to this invention,
- figure 4 is a section view according to the line IV-IV in figure 3, on an enlarged scale and,
- figures 5 and 6 illustrate the detail indicated by the arrow V-Vi in figure 2, in enlarged scale, according to two forms of embodiment.

With reference to drawings, number 1 indicates an electrostatic motor according to this invention, comprising a stator 2 and a rotor 3. The stator 2, schematically illustrated in the example, consists of a plate defining a tapered wall with a convex internal surface 2a bearing a dial of radial electrodes 4, which are electrically conducting.

As shown in figure 4, the stator 2 can comprise a layer of plastic material 5 bearing the electrodes 4.

Furthermore, these electrodes are coated by a layer of dielectric material 6.

The rotor 3 consists of a disc which in the illustrated example is flat, but could also be tapered, which taper ratio angle is in any case higher than the taper ratio angle of the stator 2. In the illustrated example (see figure 4), the disc 3 is made of a polymeric membrane 3a with a metallic coating 3b.

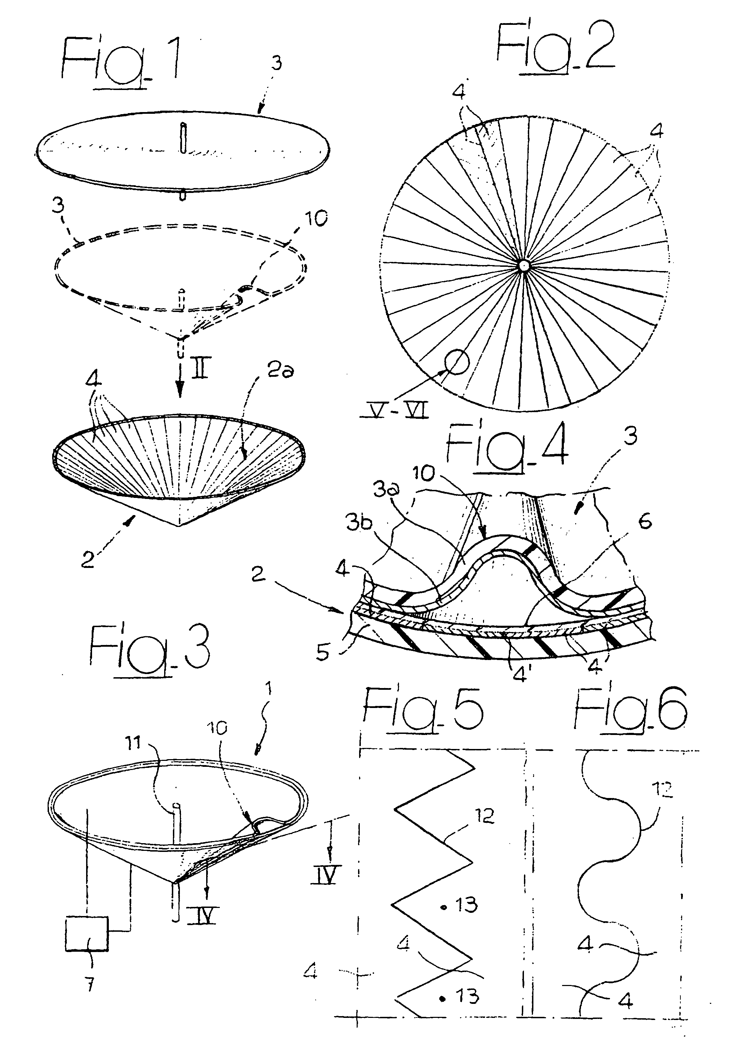

Electrical power supply means 7 (illustrated only schematically in figure 3) are connected to the motor 1 and are able to supply an electrical voltage between the electrically conducting layer 3b of the flexible disc forming the rotor 3 and the electrodes 4 of the stator so to cause adhesion by electrostatic effect of the rotor 3 over the internal convex surface 2a of the stator.

As a consequence of the different taper ratio of the rotor and the stator, the rotor forms one or more waves 10 projecting from the general tapered surface of the stator 2. The power supply means 7 are capable of powering all electrodes 4 with the exception of one or more electrodes 4' (dotted in figure 2), where the wave 10 can be formed. Furthermore, the electrical power means 7 are suitable for moving the electrode, or the electrodes, which are not powered along the dial of electrodes 4, so to make the wave 10 formed by rotor 2 travel along the tapered surface of the stator. By effect of the different curvature of the surfaces defined by the stator and the rotor, after each turn of the wave (or of the waves) 10, the rotor is turned by a certain angle (which theoretically can be demonstrated as being equal to the complementary angle of the angle at the vertex of the cone of the stator). Consequently, continuing to cause the circular movement of the wave, or the waves, 10 to cause a continuous revolution of the rotor. The latter is solidly connected to a shaft 11 allowing the transmission of a torque to a driven part.

As mentioned above, the thickness of the rotor can be comprised in the range from 0.5 microns to 10 microns, while the thickness of the electrically conductive coating defining the electrodes 4 can be comprised in the range from a few tenths of a micron and a few microns. Typically, the power supply means 7 are suitable for supplying a voltage in the order, for examples, of 100 volts and the above described motor is able to supply a power in the order, for example, of a few tenths of a watt to 1 watt .

As shown in figure 5 or 6, the demarcation line between the two adjacent electrodes 4, indicated by number 12, is a zigzag line (for example, broken as shown in figure 5 or curved as shown in figure 6). In such a way, when one of the two adjacent electrodes is de-energised, the adjacent one is energised, there are portions of surface 13 which ensure the correct adhesion of the rotor on the previously de-energised electrode, so to favour the correct movement of the wave formed by the rotor.

Studies and experiences conducted by the applicant have demonstrated that a motor of the type described above is able to work correctly and output the power stated above.

Naturally, numerous changes can be implemented to the construction and forms of embodiment of the invention herein envisaged, all comprised within the context of the concept characterising this invention.

For example, the invention also comprises equivalent solutions which entail an inversion of the functions of the surfaces illustrated in this description as surfaces of the stator and of the rotor. Furthermore, this invention is applicable also to more or less complex surfaces, that is surfaces which are not exactly tapered, providing that the co-operating surfaces of the stator and the rotor must present different curvatures.

## Claims

1. Electrostatic motor comprising:
- a stator (2), including a substrate with a convex tapered surface (2a) which bears a dial of radial electrodes (4) covered by a layer of dielectric coating (6);
- a rotor (3), consisting of a flexible, electrically conducting disc facing the mouth of the tapered surface (2a) of the stator (2);
- devices (7) for supplying a voltage between the electrodes (4) of the stator (2) and the rotor (3), so to make the disc (3) forming the rotor adhere to the convex tapered surface (2a) by electrostatic effect, **characterized in that** said disc (3) having a tapered surface which taper ratio angle is higher than that of the stator (2), and forming in said condition one or more radial waves (10) projecting from the general tapered surface of the stator (2), consequent to the different taper ratio of stator and rotor,
said power devices (7) being suitable for:
- powering all electrodes (49 of the stator (2), with the exception of at least one electrode (4'), where the rotor (3) can consequently form said wave (10) and,
- moving along the dial of electrodes (4) said at least one electrode (4') which is not powered, so to make the corresponding wave (10) formed by the rotor (3) turning on said tapered surface (2a) of the stator travel, so that after each turn of the wave (10) the rotor is turned by a certain angle with respect to the stator (2).

2. Electrostatic motor according to claim 1, **characterised in that** the rotor (3) is a metallic membrane.

3. Electrostatic motor according to claim 1, **characterised in that** the rotor (3) is a polymeric membrane with a metallic coating.

4. Electrostatic motor according to claim 1, **characterised in that** the rotor (3) is a membrane which thickness is included in the range from 0.5 to 10 microns.

5. Electrostactic motor according to claim 1, **characterised in that** the stator (2) has a conductive coating forming the electrodes (4) which thickness is included in the range from a few tenths of a micro to a few microns.

6. Electrostatic motor according to claim 1, **characterised in that** the demarcation line between each pair of adjacent electrodes (4) is a zigzag line (12).

## Patentansprüche

1. Elektrostatischer Mikromotor umfassend:
- einen Stator (2) mit einem Träger mit nach außen gewölbter kegelförmiger Oberfläche (2a) der eine skalenartige Scheibe mit Radialelektroden (4) trägt, die von einer Schicht aus einem nichtleitenden Belag bedeckt ist;
- einen Rotor (3), der aus einer biegsamen elektrisch leitenden Scheibe besteht, die der Öffnung der kegelförmigen Oberfläche (2a) des Stators (2) gegenüberliegt;
- Einrichtungen (7) zur Lieferung einer Spannung zwischen den Elektroden (4) des Stators (2) und des Rotors (3), so dass die den Rotor bildende Scheibe durch elektrostatische Wirkung an der nach außen gewölbten kegelförmigen Oberfläche (2a) anhaftet
**dadurch gekennzeichnet, dass** die genannte Scheibe (3) eine kegelförmige Oberfläche mit einer Konizität aufweist, die größer ist als die des Stators (2) und beim Anhaften eine oder mehrere radiale Wellen (10) ausbildet, die über die kegelförmige Oberfläche des Stators auf Grund der unterschiedlichen Konizität von Stator und Rotor hervorsteht(en),
- wobei die Einrichtung (7) zur Leistungsversorgung so angepasst ist, dass sie:
- alle Elektroden (4) des Stators (2) mit Leistung versorgt, mit Ausnahme von wenigstens einer Elektrode (4'), wo der Rotor (3) demnach die genannte Welle (10) ausbildet, und
- dass die entlang der skalenartigen Scheibe von Elektroden (4) mit der nicht mit Leistung versorgten wenigstens eine Elektrode (4') fortschreitet, so dass die entsprechende vom sich auf der kegelförmigen Oberfläche (2a) des Stators drehenden Rotor (3) gebildete entsprechende Welle (10) wandert, so dass nach jeder Drehung der Welle (10) der Rotor um einen gewissen Winkel bezogen auf den Stator (2) weitergedreht wird.

2. Elektrostatischer Mikromotor nach Anspruch 1, **dadurch gekennzeichnet, dass** der Rotor (3) eine metallische Membran ist.

3. Elektrostatischer Mikromotor nach Anspruch 1, **dadurch gekennzeichnet, dass** der Rotor (3) eine Polymermembran mit metallischer Beschichtung ist.

4. Elektrostatischer Mikromotor nach Anspruch 1, **dadurch gekennzeichnet, dass** der Rotor (3) eine Membrane mit einer Dicke im Bereich von 0,5 bis 10 µm ist.

5. Elektrostatischer Mikromotor nach Anspruch 1, **dadurch gekennzeichnet, dass** der Stator (2) eine leitende Beschichtung aufweist, die die Elektroden (4) bildet, deren Dicke im Bereich von ein paar Zehntel µm bis einige µm liegt.

6. Elektrostatischer Mikromotor nach Anspruch 1, **dadurch gekennzeichnet, dass** die Grenzlinie zwischen jedem Paar von einander benachbarter Elektroden (4) eine Zickzacklinie (12) ist.

## Revendications

1. Moteur électrostatique comprenant :
- un stator (2) contenant un support de surface conique convexe (2a) qui soutient un cadran d'électrodes radiales (4) recouvert d'une couche de revêtement diélectrique (6) ;
- un rotor (3) constitué d'un disque souple et conducteur de l'électricité qui fait face à l'embouchure de la surface conique (2a) du stator (2) ;
- des dispositifs (7) qui permettent d'établir une tension électrique entre les électrodes (4) du stator (2) et le rotor (3), afin de faire adhérer le disque (3) formant le rotor à la surface conique convexe (2a) par effet électrostatique, **caractérisé en ce que** ledit disque (3) présente une surface conique dont l'angle de conicité est supérieur à celui du stator (2), et forme dans cet état une ou plusieurs ondulations radiales (10) au-dessus de la surface conique globale du stator (2), du fait de la conicité différente du stator et du rotor,
ledit moyen d'alimentation (7) étant approprié pour :
- alimenter l'ensemble des électrodes (49) sur le stator (2), à l'exception d'au moins une électrode (4'), le rotor pouvant ainsi former ladite ondulation (10) et pour
- déplacer, le long du cadran (4) ladite au moins une éléctrode (4') non alimentée, afin de faire tourner l'ondulation correspondante (10) formée par le rotor (3) sur ladite surface conique (2a) de la course du stator, afin qu'à chaque tour de l'ondulation (10), le rotor tourne d'un certain angle par rapport au stator (2).

2. Moteur électrostatique selon la revendication 1, **caractérisé en ce que** le rotor (3) est constitué d'une membrane métallique.

3. Moteur électrostatique selon la revendication 1, **caractérisé en ce que** le rotor (3) est constitué d'une membrane polymère dotée d'un placage métallique.

4. Moteur électrostatique selon la revendication 1, **caractérisé en ce que** le rotor (3) est constitué d'une membrane dont l'épaisseur est comprise entre 0,5 et 10 microns.

5. Moteur électrostatique selon la revendication 1, **caractérisé en ce que** le stator (2) comporte un revêtement conducteur qui constitue les électrodes (4) dont l'épaisseur est comprise entre quelques dixièmes de micron et quelques microns.

6. Moteur électrostatique selon la revendication 1, **caractérisé en ce que** la ligne de démarcation séparant chaque paire d'électrodes adjacentes (4) est une ligne en zigzag (12).
